Europäisches Patentamt

European Patent Office

Office européen des brevets

(19)

(11) Veröffentlichungsnummer: **0 158 822**
**B2**

(12) **NEUE EUROPÄISCHE PATENTSCHRIFT**

(45) Veröffentlichungstag der neuen Patentschrift:
**05.12.90**

(21) Anmeldenummer: **85102794.6**

(22) Anmeldetag: **12.03.85**

(51) Int. Cl.⁵: **C 08 L 69/00,** C 08 L 67/02,
C 08 K 5/10 // (C08L69/00,
67:02, 51:00,
55:00),(C08L67/02, 69:00,
51:00, 55:00)

(54) Thermoplastische Zusammensetzungen mit verbesserten mechanischen Eigenschaften.

(30) Priorität: **23.03.84 US 593001**

(43) Veröffentlichungstag der Anmeldung:
**23.10.85 Patentblatt 85/43**

(45) Bekanntmachung des Hinweises auf die
Patenterteilung:
**20.04.88 Patenblatt 88/16**

(45) Bekanntmachung des Hinweises auf die
Entscheidung über den Einspruch:
**05.12.90 Patentblatt 90/49**

(84) Benannte Vertragsstaaten:
**DE FR GB IT**

(56) Entgegenhaltungen:
**EP-A-0 015 146**
**EP-A-0 025 920**
**WO-A-80/00153**
**WO-A-83/00493**
**DE-A-2 309 450**
**FR-A-2 197 930**

**Die Akte enthält technische Angaben, die nach
dem Eingang der Anmeldung eingereicht
wurden und die nicht in dieser Patentschrift
enthalten sind.**

(73) Patentinhaber: **MOBAY CORPORATION**
**Penn Lincoln Parkway West**
**Pittsburgh, Pennsylvania 15205 (US)**

(72) Erfinder: **Chung, James Y.J.**
**182 Ridgeview Drive**
**Wexford Pennsylvania 15090 (US)**
Erfinder: **Neuray, Dieter, Dr.**
**1822 Tragone Drive**
**Pittsburgh Pennsylvania 15241 (US)**

(74) Vertreter: **Gremm, Joachim, Dr. et al**
**Bayer AG Konzernverwaltung RP Patente
Konzern**
**D-5090 Leverkusen 1, Bayerwerk (DE)**

Courier Press, Leamington Spa, England.

# EP 0 158 822 B2

## Description

### Field of the Invention

The present invention relates to synthetic thermoplastic molding compositions and more particularly to molding compositions comprising a blend of polycarbonate, polyalkylene terephthalate and a rubber based impact-modifier.

### Summary of the Invention

Thermoplastic molding compositions comprising a polycarbonate, a thermoplastic polyester and an impact modifier were found to exhibit an improved level of mechanical properties upon the blending therewith a relatively small amount of an ester plasticizer.

### Background of the Invention

A resin composition comprising a blend of an aromatic polycarbonate and an acrylate based impact modifier has been disclosed in U.S. Patent 4,299,928. U.S. Patent 3,130,177 disclosed blends of a polycarbonate and a graft copolymer of polybutadiene and a mixture of an alkenyl cyanide and a vinyl aromatic hydrocarbon, having improved thermoplastic properties.

U.S. Patent 3,864,428 disclosed a composition comprising an aromatic polyester, an aromatic polycarbonate and a graft copolymer of a butadiene polymer and a vinyl monomer. U.S. Patent 4,223,125 relates to polyalkylene terephthalates and discloses an aromatic acid ester in the context of rapidly crystallizing polyester compositions.

EP—A 25 920 discloses molding compositions containing an aromatic polyester, a polycarbonate and an impact modifier based on a crosslinked polyacrylate core. Although an optional plasticizer is mentioned on page 6, a particular plasticizer is not disclosed.

WO 80/00 153 discloses a polycarbonate based composition incorporating a small amount of an oligomeric ester plasticizer in admixture with an acrylate rubber modifier. The composition is said to have an improved processability and notched Izod impact strength characteristics. The only plasticizer disclosed in the reference and used in the Examples is Kodaflex NP-10, an adipic acid ester (see page 5, lines 25—27) which is outside the definition of component (iv).

Accordingly, the prior art does not teach to reduce the melt viscosity while deleterious effects an impact strength are minimized, by the addition of an ester of an aromatic carboxylic acid and an aliphatic alcohol.

### Detailed Description of the Invention

The present invention relates to thermoplastic molding compositions comprising a resinous blend of (i) an aromatic polycarbonate, (ii) a thermoplastic polyester and (iii) an impact-modifier, and is predicated on the surprising and unexpected improved level of mechanical properties of the blend resulting upon the addition of (iv) an ester plasticizer therewith.

In particular, the present invention refers to a thermoplastic molding composition comprising a blend of

(i) 15—85% by weight of an aromatic polycarbonate,

(ii) 15—85% by weight of a thermoplastic polyester having an intrinsic viscosity of from 0.5 to 2.0 dl/g, as measured in phenol/o-dichlorobenzene (1:1 parts by weight) at 25°C using an Ubbelohde viscometer,

(iii) 5—30% by weight of an impact modifier, said percentages being relative to the weight of (i) plus (ii), and

(iv) 0.1—5.0% by weight of an ester plasticizer, said percentage being in relation to the weight of the blend (i) plus (ii) plus (iii),

characterized in that the ester plasticizer (iv) is the esterification product of trimellitic acid and a $C_1$—$C_{20}$ aliphatic alcohol, said plasticizer (iv) having a number average weight of at most 5000.

The polycarbonates (i) useful in the practice of the invention are homopolycarbonates, copolycarbonates and terpolycarbonates or mixtures thereof. The polycarbonates (i) generally have molecular weights of 10,000—200,000 (weight average molecular weight), preferably 20,000—80,000, and are alternatively characterized by their melt flow of 1—24 gm/10 min. at 300°C per ASTM D-1238. These polycarbonates (i) may be prepared, for example, by the known diphasic interface process from phosgene and dihydroxy compounds by polycondensation (see German Offenlegungsschriften 2,063,050; 2,053,052; 1,570,703; 2,211,956; 2,211,957 and 2,248,817 and French Patent 1,561,518 and the monograph, H. Schnell, *Chemistry and Physics of Polycarbonates,* Interscience Publishers, New York, 1964, all incorporated herein by reference).

In the present context, preferred dihydroxy compounds suitable for the preparation of the polycarbonates (i) of the invention include hydroquinone, resorcinol, bis-(hydroxyphenyl)-alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfones and α,α-bis-(hydroxyphenyl)-diisopropyl-benzenes.

Particularly preferred examples of suitable dihydroxy compounds are 2,2-bis-(4-hydroxyphenyl)-propane (bisphenol A), 2,4-bis-(4-hydroxyphenyl)-2-methylbutane, 1,1-bis-(4-hydroxyphenyl)-cyclohexane,

2

α,α-bis-(4-hydroxyphenyl)-p-diisopropyl-benzene, 2,2-bis-(3-chloro-4-hydroxyphenyl)-propane, hydroxybenzophenone and 4,4'-sulfonyl diphenol. The most preferred one is 2,2-bis-(4-hydroxyphenyl)-propane (bisphenol A).

The polycarbonates (i) of the invention may entail in their structure units derived from one or more of the suitable bisphenols.

The preparation of polycarbonates (i) may be carried out in accordance with any of the processes known in the art, for example, by the interfacial polycondensation process, polycondensation in a homogeneous phase or by transesterification.

In the preparation of the polycarbonates (i) of the invention monofunctional reactants such as monophenols may be used in order to limit their respective molecular weights. Also, branching agents may be employed. Branching may be obtained by the incorporation of small amounts, preferably of between about 0.05 and 2.0 mol% (relative to diphenols employed), of trifunctional or more than trifunctional compounds, especially compounds having three or more phenolic hydroxyl groups. Polycarbonates of this type are described for example, in German Offenlegungsschriften (German Published Specifications) 1,570,533; 1,596,762; 2,116,974 and 2,113,347; British Specification 1,079,821 and U.S. Patent 3,544,514 (incorporated herein by reference).

In the context of this invention, saturated polyesters (ii) are defined herein as the condensation products of aromatic dicarboxylic acids (or ester-forming derivatives thereof) and aliphatic or cycloaliphatic diols, particularly polyalkylene terephthalates, which may be obtained in known manner from terephthalic acid (or ester-forming derivatives thereof) and alkylene diols or cycloalkylene diols containing from 2 to 10 carbon atoms (*cf.* for example Kunststoff-Handbuch, Vol. VIII, pages 695 *et seq.,* Carl-Hanser-Verlag, Munich, 1973 and the publications cited therein).

The most preferred aromatic dicarboxylic acid components for preparing the aromatic polyesters (ii) are terephthalic acid and its ester-forming derivatives such as, for example, dimethyl terephthalate and terephthaloyl dichloride.

The glycols suitable for preparing the polyesters (ii) of the invention includes for example aliphatic diols having 2 to 10 carbon atoms such as ethylene glycol, 1,3-propylene glycol, 1,4-butanediol, neopentyl glycol, 1,5-pentanediol, 1,6-hexanediol, decamethylene glycol, cyclohexanediol and cyclohexane dimethanol as well as long-chain glycols (MW up to about 6000) such as poly(tetramethylene glycol) and mixtures thereof.

Preferred polyalkylene terephthalates (ii) are polyethylene terephthalate, poly-1,4-butylene terephthalate, copolymers and mixtures thereof. Preferred copolymers contain from 30 to 70, particularly from 40 to 60 mol%, of co-condensed ethylene glycol units and from 70 to 30, particularly from 60 to 40 mol % of co-condensed butane diol-1,4 units, based on the total amount of co-condensed glycol units.

In addition, the thermoplastic polyesters (ii) may be branched by carboxylic acids or polyols containing more than two reactive groups; see German Auslegeschrift No. 1,900,270 and U.S. Patent No. 3,692,744.

A basic requirement governing the use of the saturated polyesters is that they should have a sufficiently high molecular weight as characterised by an Intrinsic viscosity of from 0.5 to 2.0 dl/g, preferably from 0.6 to 1.5 dl/g and, more particularly, from 0.7 to 1.3 dl/g, as measured in phenol/*o*-dichlorobenzene at 25°C (1:1 parts, by weight) using an Ubbelohde viscometer.

The polyethylene terephthalates used as component (ii) generally have an Intrinsic viscosity of from 0.5 to 1.5 dl/g, preferably from 0.6 to 1.3 dl/g, more preferably from 0.7 to 1.2 dl/g and the polybutylene terephthalates used as component (ii) generally have an Intrinsic viscosity of from 0.7 to 1.5 dl/g, preferably from 0.8 to 1.3 dl/g, more preferably from 0.8 to 1.05 dl/g, in each case measured in phenol/*o*-dichlorobenzene at 25°C (1:1 parts, by weight) using an Ubbelohde viscometer.

In the context of the invention, impact modifiers (iii) are rubbery compounds characterized in their rubber elastic properties in that their glass transition temperature is below 20°C (determined by DTA=differential thermoanalysis).

The term rubbery compounds in the present context is understood to include natural rubbers and synthetic rubbers. Suitable synthetic rubbers include polyurethane rubber, ethylene/vinyl acetate rubber, acrylate rubber, polypentenamer rubber and ethylene-propylene-diene rubbers as well as diene rubbers, i.e., homopolymers of conjugated dienes having 4 to 8 carbon atoms such as butadiene, isoprene, piperylene and chloroprene, copolymers of such dienes such as with acrylic or methacrylic acid or derivatives thereof (e.g., acrylonitrile, methacrylonitrile, butyl acrylate and methyl methacrylate) or isobutylene. Butadiene, butadiene/methyl methacrylate, butadiene/butyl acrylate, ethylene/propylene/diene, polypentenamer, butadiene/acrylonitrile and acrylate rubbers are particularly preferred. In a particularly preferred embodiment, the rubbery phase is at least partially crosslinked.

The rubber compounds of the invention are preferably graft copolymers obtained by polymerizing certain monomers in the presence of the rubber. The certain monomers are:

(1) styrene and its derivatives such as α-methylstyrene, α-chlorostyrene, p-chlorostyrene, 2,4-dichlorostyrene, p-methylstyrene, 3,4-dimethylstyrene, o- and p-divinyl benzene, p-methyl-α-methylstyrene and p-chloro-α-methylstyrene;

(2) acrylic and methacrylic acid as well as nitriles and esters based thereon, preferably $C_1$—$C_{10}$ alkyl or cycloalkyl esters, such as acrylic and methacrylic, acrylonitrile, methacrylonitrile, methyl acrylate, ethyl acrylate, n-propyl and isopropyl acrylate, n-butyl and isobutyl acrylate, 2-ethylhexyl acrylate, methyl methacrylate, ethyl methacrylate, n-propyl and isopropyl methacrylate, n-butyl and isobutyl methacrylate, cyclohexyl methacrylate and isobornyl methacrylate;

(3) maleic acid anhydride.

The graft copolymers may be obtained by polymerizing monomers from group (1) or group (2) or both groups (1) and (2) in the presence of the rubbers as mentioned above, optionally also with (3).

Particularly preferred groups of such graft polymers are obtained by polymerizing (a) 50—100% by weight of styrene, α-methyl styrene or mixtures thereof (b) 0—50% by weight (based on total monomers) of the other above-mentioned styrene derivatives in the presence of butanene, butadiene/styrene, butadiene/methyl methacrylate, butadiene/butyl acrylate, ethylene/propylenediene, polypentenamer or butadiene/acrylonitrile rubbers. Other particularly preferred graft polymers are obtained by polymerizing 30—95% by weight of styrene and/or one of the above-mentioned styrene derivatives and 5—70% by weight of the above-mentioned acrylic and/or methacrylic compounds (% by weight, based on the sum of monomers) in the presence of the above-mentioned rubbers.

Among the particularly preferred graft polymers, those which are obtained by polymerizing styrene or by polymerizing 20—95 percent by weight of styrene and 5—80 percent by weight of α-methyl styrene (percent by weight based on the sum of monomers) or 30—95% by weight of styrene and/or α-methyl styrene and 5—70 percent by weight of acrylonitrile and/or methacrylonitrile and/or methyl methacrylate (percent by weight, based on the sum of monomers) in the presence of the above-mentioned rubbers are particularly important.

A yet additional preferred embodiment is represented by the use of a grafted polyacrylate rubber. In general, any of the polyalkyl acrylates described in U.S. Patent No. 3,591,659, can be used, especially those containing units derived from n-butyl acrylate. Preferably, the polyacrylate resin will be in the form of a rubber-elastic graft copolymer having a glass transition temperature below 20°C as described in Schlichting et al U.S. Patent 4,022,748. Especially preferred among the acrylate based systems are the ones which are described in detail in U.S. Patent 3,808,180 and U.S. Patent 4,096,202. Briefly, the technology described in 4,096,202 is that of the preparation of a specific class of multiphase compounds. These are compositions comprising about 25 to 95 percent by weight of a first elastomeric phase and about 75 to 5 percent by weight of a second, rigid, thermoplastic phase. The first phase is polymerized from about 75 to 99.8 percent by weight $C_1$ to $C_6$ alkyl acrylate resulting in an acrylic rubber core having a glass transition temperature below about 10°C which is crosslinked with 0.1 to 5 percent by weight of a crosslinking monomer and to which is added 0.1 to 5 percent by weight of a graft-linking monomer.

The preferred alkyl acrylate is butyl acrylate. The crosslinking monomer is a polyethylenically unsaturated monomer having a plurality of addition polymerizable reactive groups all of which polymerize at substantially the same rate of reaction. Preferred crosslinking monomers include polyacrylic and polymethacrylic esters of $C_2$—$C_{10}$ polyols such as butylene diacrylate and dimethacrylate, and trimethylol propane trimethacrylate; di- and trivinyl benzene, vinyl acrylate and methacrylate. The most preferred crosslinking monomer is butylene diacrylate. The graft-linking monomer is a polyethylenically unsaturated monomer having a plurality of addition polymerizable reactive groups, at least one of which polymerizing at a substantially different rate of polymerization from at least one other of said reactive groups. The function of the graft-linking monomer is to provide a residual level of unsaturation in the elastomeric phase, particularly in the latter stages of polymerization and consequently at or near the surface of the elastomer particles. The preferred graft-linking monomers are allyl methacrylate and diallyl maleate.

The final stage monomer system can be comprised of alkyl methacrylate (preferably $C_1$—$C_6$ alkyl methacrylate), styrene, acrylonitrile, alkyl acrylates (preferably $C_1$—$C_6$ alkyl acrylates), and the like, as long as its Tg is at least 20°C. Preferably, the final stage monomer system is at least 50 weight percent $C_1$ to $C_4$ alkyl methacrylate. It is further preferred that the final stage polymer be free of units which tend to degrade polycarbonate, respectively poly(alkylene terephthalate); for example, acid, hydroxyl amino and amide groups.

A certain such acrylic rubber interpolymer composite characterized in that its acrylic rubber core is comprised of n-butyl acrylate and in that its cross-linking agent is 1,3-butylene diacrylate and in which the graft-linking agent is diallyl maleate and the second phase monomeric system of which is methyl methacrylate, said components relating by weight to 79.2/0.4/0.4/20.0, is particularly preferred.

The ester plasticizer (iv) in the context of the present invention is the esterification product of trimellitic acid and a $C_1$—$C_{20}$, preferably $C_5$—$C_{13}$, aliphatic alcohol.

Detailed description of the various methods for the preparation of ester plasticizers (iv) suitable in the present context may be found in E. Müller, "Methoden der Organischen Chemie" (Houben-Weyl), Vol. 14/2, page 1 et seq., Georg Thieme Verlag, Stuttgart 1963 and in V. V. Korshak and S. V. Vinogradova, "Polyesters", Pergamon Press, Oxford, 1965, pages 34—63.

Among the suitable alcohols are those in which at least one hydroxy group is bound to an aliphatically bound carbon atom, including methanol, octylbenzylalcohol, butyl alcohol, isobutyl alcohol, 2-ethylhexanol, isononylalcohol, n-octylalcohol, iso-decylalcohol, butoxyethyl alcohol, butoxyethyloxyethylalcohol, n-hexylalcohol, 2-butoxyethyl alcohol, ethyl alcohol, amyl alcohol, n-undecylalcohol, tridecyl alcohol, butylbenzyl alcohol, methoxy ethyl alcohol, allyl alcohol and hydroabietyl alcohol. Also included are di-, tri- and tetravalent alcohols such as, for example, ethylene glycol, propane diol-1,3 and -1,2, butanediol-1,3 and -1,4, pentane diol-1,5, hexane diol-1,6, dipropylene glycol-1,3 and -1,2, diethylene glycol, triethylene glycol, tetraethylene glycol, polyethylene glycol, neopentyl glycol, glycerol, trimethylolethane, trimethylolpropane, pentaerythritol, 2,2,4-trimethyl-1,3-pentanediol.

The ester plasticizers (iv) in the context of the present invention may be either monomeric or oligomeric in which case their number average molecular weight should be at most 5000, preferably no more than 3000.

In accordance with the present invention the ester plasticizer (iv) is added to the resinuous composition at a level of 0.1 to 5.0%, by weight, calculated on the composition comprising components (i), (ii) and (iii); a preferred range of plasticizer addition is 1.5 to 3.0%, by weight. The compositions of the invention are characterized in their improved tensile strength, flexural strength and flexural modulus as compared to prior art compositions.

The resinous compositions in the present context comprise (i) a polycarbonate, (ii) a thermoplastic polyester and (iii) an impact modifier. The relative amounts of these components, stated in percent, by weight, relative to the weight of the composition comprising components (i) plus (ii), is 15—85% by weight of polycarbonate, 15—85% by weight of thermoplastic polyester and 5—30% by weight of the impact modifier, the corresponding preferred ranges are 20—50, 50—80 and 10—25 percents by weight.

The preparation of the resinous compositions of the invention follows procedures well known in the art for uniformly mixing resinous components. The use of a Banbury mixer, a hot roll or an extruder for the purpose is suitable. The method of blending is not linked to and carries no criticality, in the present context. It was found useful to blend the components simultaneously.

The composition may further contain any of the various additives such as are customarily used in the art to obtain special properties such as stabilizers, mold release agents, flame retardants, nucleating agents, fillers, blowing agents and reinforcements.

## Claims

1. A thermoplastic molding composition comprising a blend of
(i) 15—85% by weight of an aromatic polycarbonate,
(ii) 15—85% by weight of a thermoplastic polyester having an Intrinsic viscosity of from 0.5 to 2.0 dl/g, as measured in phenol/o-dichlorobenzene (1:1 parts by weight) at 25°C using an Ubbelohde viscometer,
(iii) 5—30% by weight of an impact modifier, said percentages being relative to the weight of (i) plus (ii), and
(iv) 0.1—5.0% by weight of an ester plasticizer, said percentages being in relation to the weight of the blend (i) plus (ii) plus (iii),
characterized in that the ester plasticizer (iv) is the esterification product of trimellitic carboxylic acid and a $C_1$—$C_{20}$ aliphatic alcohol, said plasticizer (iv) having a number average weight of at most 5000.

2. Molding composition according to claim 1, characterized in that component (iv) has a glass transition temperature (determined by DTA) of at least 20°C below the glass transition temperature of the polyester component (ii), in the case of a polyester mixture below the lowest glass transition temperature of the polyester mixture.

3. Molding composition according to claim 2, characterized in that the difference in glass transition temperature is at least 40°C.

4. Molding composition according to claims 1—3, characterized in that the blend comprises 20—50% by weight of polycarbonate (i), 40—80% by weight of polyester (ii), 10—25% by weight of impact modifier (iii), and the ester plasticizer (iv).

5. Molding composition according to claims 1—4, characterized in that said ester plasticizer (iv) is present in an amount of 1.5 to 3% by weight, relative to the composition (i) plus (ii) plus (iii).

6. Molding composition according to claims 1—5, characterized in that the ester plasticizer (iv) is the esterification product of a $C_5$—$C_{13}$ alcohol.

7. Molding composition according to claims 1—6 characterized in that the polyester (ii) is a polyethylene terephthalate, a polybutylene terephthalate, a mixture or a copolymer thereof.

8. Molding composition according to claims 1—7, characterized in that the polycarbonate (i) is a bisphenol A homopolycarbonate.

9. Molding composition according to claims 1—8, characterized in that the impact modifier (iii) is selected from the group consisting of ABS and acrylate rubber.

## Patentansprüche

1. Thermoplastische Formmasse aus einer Mischung von
(i) 15 bis 85 Gew.-% eines aromatischen Polycarbonates,
(ii) 15 bis 85 Gew.-% eines thermoplastischen Polyesters mit einer Intrinsikviskosität von 0,5 bis 2,0 dl/g, gemessen in Phenol/o-Dichlorbenzol (1:1 Gew.-Teile) bei 25°C mit einem Ubbelohde-Visksiometer,
(iii) 5 bis 30 Gew.-% eines Schlagfestmachers, wobei sich der Prozentsatz auf das Gewicht von (i) plus (ii) bezieht, und
(iv) 0,1 bis 5,0 Gew.-% eines plastifizierend wirkenden Esters, wobei sich der Prozentsatz auf das Gewicht der Mischung (i) plus (ii) plus (iii) bezieht,

dadurch gekennzeichnet, daß der plastifizierende Ester (iv) das Veresterungsprodukt von Trimellitsäure mit einem $C_{1-20}$-aliphatischen Alkohol ist und der Weichmacher (iv) ein Zahlendurchschnittsgewicht von höchstens 5.000 hat.

2. Formmasse gemäß Anspruch 1, dadurch gekennzeichnet, daß die Komponente (iv) eine Glasübergangstemperatur (bestimmt durch Differentialthermoanalyse) von wenigstens 20°C unterhalb der Glasübergangstemperatur der Polyesterkomponente (ii), und im Falle einer Polyestermischung unterhalb der niedrigsten Glasübergangstemperatur der Polyestermischung hat.

3. Formmasse gemäß Anspruch 2, dadurch gekennzeichnet, daß die Differenz in der Glasübergangstemperatur wenigstens 40°C beträgt.

4. Formmasse gemäß Ansprüchen 1 bis 3, dadurch gekennzeichnet, daß die Mischung 20 bis 50 Gew.-% des Polycarbonates (i), 40 bis 80 Gew.-% des Polyesters (ii), 10 bis 25 Gew.-% des Schlagfestmachers (iii) und des Ester-Weichmachers (iv) enthält.

5. Formmasse gemäß Ansprüchen 1 bis 4, dadurch gekennzeichnet, daß der Ester-Weichmacher (iv) in einer Menge von 1,5 bis 3 Gew.-%, bezogen auf die Zusammensetzung (i) plus (ii) plus (iii), vorliegt.

6. Formmasse gemäß Ansprüchen 1 bis 5, dadurch gekennzeichnet, daß der Ester-Weichmacher (iv) das Veresterungsprodukt eines $C_{5-13}$-Alkohols ist.

7. Formmasse gemäß Ansprüchen 1 bis 6, dadurch gekennzeichnet, daß der Polyester (ii) ein Polyethylenterephthalat, ein Polybutylenterephthalat, eine Mischung oder ein Copolymer davon ist.

8. Formmasse gemäß Ansprüchen 1 bis 7, dadurch gekennzeichnet, daß das Polycarbonat (i) ein Bisphenol A-Homopolycarbonat ist.

9. Formmasse gemäß Ansprüchen 1 bis 8, dadurch gekennzeichnet, daß der Schlagfestmacher (iii) aus der Gruppe bestehend aus ABS und Acrylatkautschuk ausgewählt ist.

**Revendications**

1. Composition thermoplastique à mouler comprenant un mélange
(i) de 15 à 85% en poids d'un polycarbonate aromatique,
(ii) de 15 à 85% en poids d'un polyester thermoplastique ayant une viscosité intrinsèque de 0,5 à 2,0 dl/g, telle que mesurée dans un mélange phénol/o-dichlorobenzène (à 1:1 parties en poids) à 25°C en utilisant un viscosimètre Ubbelohde,
(iii) de 5 à 30% en poids d'un agent modificateur de résistance au choc, lesdits pourcentages étant indiqués par rapport au poids de (i) plus (ii), et
(iv) de 0,1 à 5,0% en poids d'un plastifiant du type d'un ester, ledit pourcentage étant relatif au poids du mélange de (i) plus (ii) plus (iii),
caractérisée en ce que le plastifiant du type ester (iv) est le produit d'estérification de l'acide trimellitique et d'un alcool aliphatique en $C_1$ à $C_{20}$, ledit plastifiant (iv) ayant une moyenne en nombre du poids moléculaire au plus égal à 5000.

2. Composition à mouler suivant la revendication 1, caractérisée en ce que le composant (iv) a une température de transition vitreuse (déterminée par analyse thermique différentielle d'au moins 20°C au-dessous de la température de transition du composant polyester (ii), dans le cas d'un mélange de polyesters au-dessous de la température de transition vitreuse la plus basse dudit mélange.

3. Composition à mouler suivant la revendication 2, caractérisée en ce que la différence de température de transition vitreuse est au moins de 40°C.

4. Composition à mouler suivant les revendications 1 à 3, caractérisée en ce que le mélange comprend 20 à 50% en poids de polycarbonate (i), 40 à 80% en poids de polyester (ii), 10 à 25% en poids d'agent modificateur de résistance au choc (iii), et le plastifiant (iv) du type ester.

5. Composition à mouler suivant les revendications 1 à 4, caractérisée en ce que le plastifiant (iv) du type ester est présent en une quantité de 1,5 à 3% en poids par rapport à la composition (i) plus (ii) plus (iii).

6. Composition à mouler suivant les revendications 1 à 5, caractérisée en ce que le plastifiant (iv) du type ester est le produit d'estérification d'un alcool en $C_5$ à $C_{13}$.

7. Composition à mouler suivant les revendications 1 à 6, caractérisée en ce que le polyester (ii) est un polyéthylènetéréphtalate, un polybutylènetéréphtalate, un mélange des deux ou un copolymère correspondant.

8. Composition à mouler suivant les revendications 1 à 7, caractérisée en ce que le polycarbonate (i) est un homopolycarbonate du bisphénol A.

9. Composition à mouler suivant les revendications 1 à 8, caractérisée en ce que l'agent modificateur de résistance au choc (iii) est choisi dans le groupe comprenant un caoutchouc ABS et un caoutchouc d'acrylate.